# EUROPEAN PATENT SPECIFICATION

(11) **EP 0 807 570 B1**
(45) Date of publication and mention of the grant of the patent: **23.06.1999**
(21) Application number: 97106389.6
(22) Date of filing: 17.04.1997
(51) Int. Cl.: B62M 23/02

(54) **Torque transmission device for power-assisted vehicle**
Einrichtung für Drehmomentübertragung für Fahrzeug mit Hilfsantrieb
Dispositif de transmission de couple pour un véhicule à assistance motorisée

(30) Priority: 13.05.1996 JP 11773796
(43) Date of publication of application: 19.11.1997
(73) Proprietor: HONDA GIKEN KOGYO KABUSHIKI KAISHA, Minato-ku Tokyo (JP)
(72) Inventor: Igarashi, Masashi, Wako-shi, Saitama (JP); Kimura, Taturou, Wako-shi, Saitama (JP); Takeda, Toru, Wako-shi, Saitama (JP)
(74) Representative: Liska, Horst, Dr.-Ing.

(56) References cited:
- EP-A- 0 636 537
- EP-A- 0 700 826
- DE-U- 9 416 975
- PATENT ABSTRACTS OF JAPAN vol. 096, no. 003, 29 March 1996 & JP 07 309284 A (HONDA MOTOR CO LTD), 28 November 1995,

## Description

The present invention relates to a torque transmission device for a power-assisted vehicle wherein an output component that outputs power for transmission to a drive wheel is disposed coaxially with a crankshaft having crank pedals at both ends, in such a way that it can rotate relative to said crank shaft; a first power transmission system equipped at its midsection with a first one-way clutch is disposed between the crankshaft and the output component; and a second power transmission system equipped at its midsection with a second one-way clutch is disposed between the power assist motor and the output component.

Such devices have been proposed in the past, for example, in Japanese Laid-Open Patent Application 7-309284.

In the conventional device mentioned above, the torsion bar, which is one element of a first power transmission system, is housed within the crankshaft. This makes it necessary to increase the diameter of the crankshaft in the section which houses the torsion bar in order to compensate for the decline in rigidity, resulting in a larger torque transmission device.

The present invention was developed with the foregoing in view, and is intended to provide a torque transmission device for a power-assisted vehicle which does not require increasing the diameter of the crankshaft to compensate for a decline in rigidity, thereby affording a more compact unit.

To achieve the aforementioned object, the invention of claim 1 provides a torque transmission device for a power-assisted vehicle, in which an output component that outputs power for transmission to the rear wheel is disposed coaxially with a crankshaft having crank pedals at both ends, in such a way that [said component] can rotate relative to the aforementioned crank shaft; a first power transmission system equipped at its midsection with a first one-way clutch is disposed between the crankshaft and the output component; and a second power transmission system equipped at its midsection with a second one-way clutch is disposed between the power assist motor and said output component; characterized by the fact that a pipe-shaped power transmission component, an element of the first power transmission system which allows the motive force of the crank shaft to be transmitted to the output component, is disposed coaxially encircling the crank shaft, and one end of said power transmission component is linked to the crank shaft.

The invention of claim 2 is a structure as defined in the invention of claim 1, characterized by the fact that the first one-way clutch is disposed between the other end of the aforementioned power transmission component and the output component.

The inventions defined in claims 1 and 2 ensure that the crankshaft has rigidity without increasing crankshaft diameter, contributing to a more compact torque transmission device.

The invention of claim 3 is a structure as defined in the invention of claim 1 or 2, characterized by the fact that the axial midsection of the aforementioned power transmission component is provided with a plurality of open sections disposed at intervals in the circumferential direction.

The invention defined in claim 3 affords application of approximately equal bending load [at each point] along the circumference of the power transmission component, thereby preventing local application of heavy loads to the power transmission component and contributing to a more durable power transmission component.

The invention of claim 4 is a structure as defined in the invention of claim 2 or 3, characterized by the fact that a sensor for detecting rotational phase between the crank shaft and the first one-way clutch is disposed to the outside of the aforementioned power transmission component.

The invention of claim 5 is a structure as defined in the invention of claim 4, characterized by the fact that the aforementioned sensor is equipped on the crankshaft side with an annular first movable member that encircles the power transmission component, and on the first one-way clutch side with an opposing annular second movable member that encircles the power transmission component.

With the inventions defined in claim 4 and 5, the sensor does not require much space for installation, allowing for a more compact installation. The rotational phase produced between the crankshaft and the first one-way clutch can be detected directly and in a highly reliable manner.

An embodiment of the present invention will now be described through the working example of the invention illustrated in the appended drawings.

Figs. 1 through 6 illustrate a working example of the present invention.
Fig. 1 is a side elevation of a power-assisted bicycle;
Fig. 2 is a longitudinal side elevation of the torque transmission device;
Fig. 3 is a cross section along line 3-3 in Fig. 2;
Fig. 4 is an enlarged cross section along line 4-4 in Fig. 3;
Fig. 5 is a circumferential development of the power transmission component; and
Fig. 6 is a transverse sectional view of power transmission component along line 6-6 in Fig. 5.

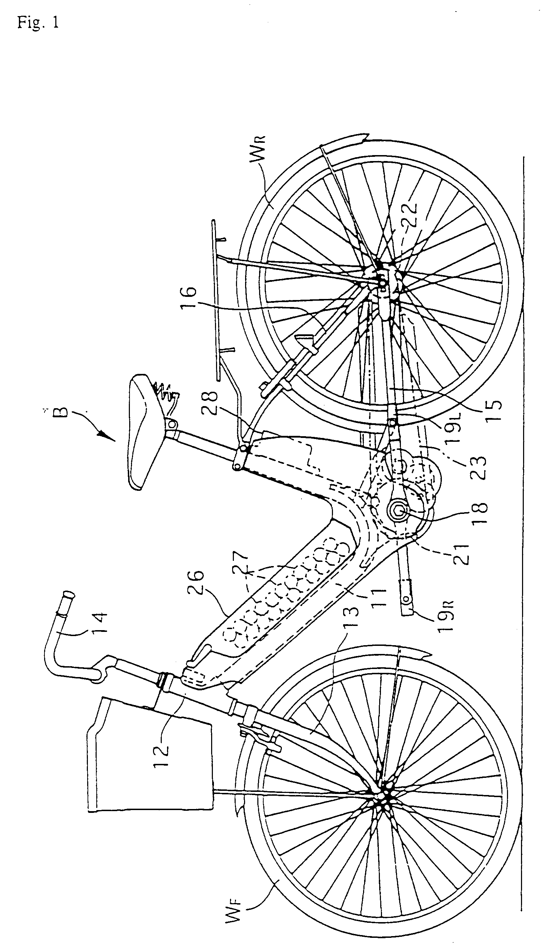

The power-assisted vehicle depicted in Fig. 1 is a power-assisted bicycle B equipped with a main frame 11 having an approximate V shape when viewed from the side. A head pipe 12 disposed at the front end of the main frame 11 rotatably supports the front fork 13. A handlebar 14 is mounted to the top end of the front fork 13, and the front wheel W_{F} is rotatably supported at the bottom end of the front fork 13. A pair of rear forks 15, reinforced by a pair of stays 16 and extending backward from the lower section of the main frame 11, support the rear wheel W_{R}, which serves as the drive wheel.

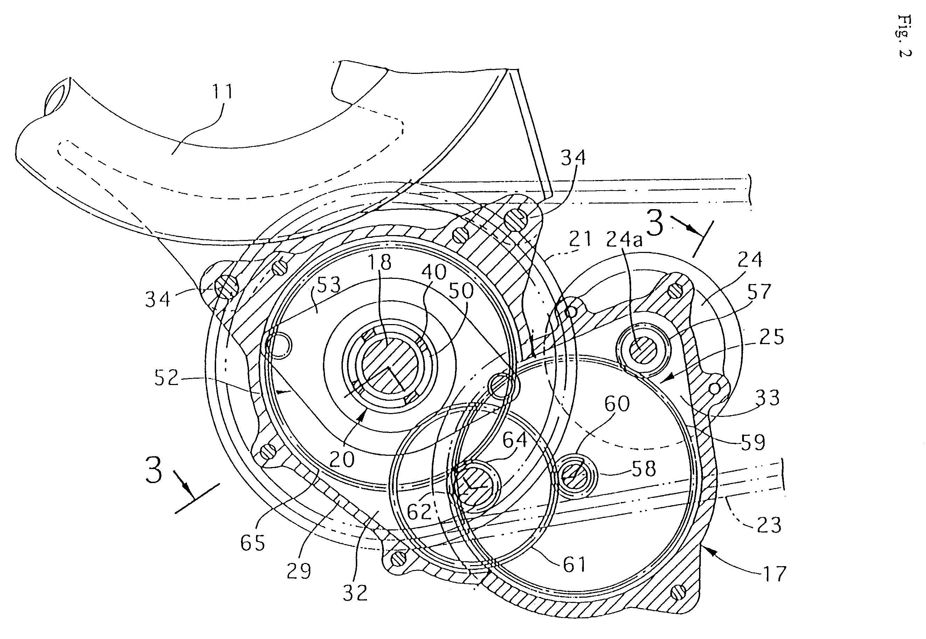

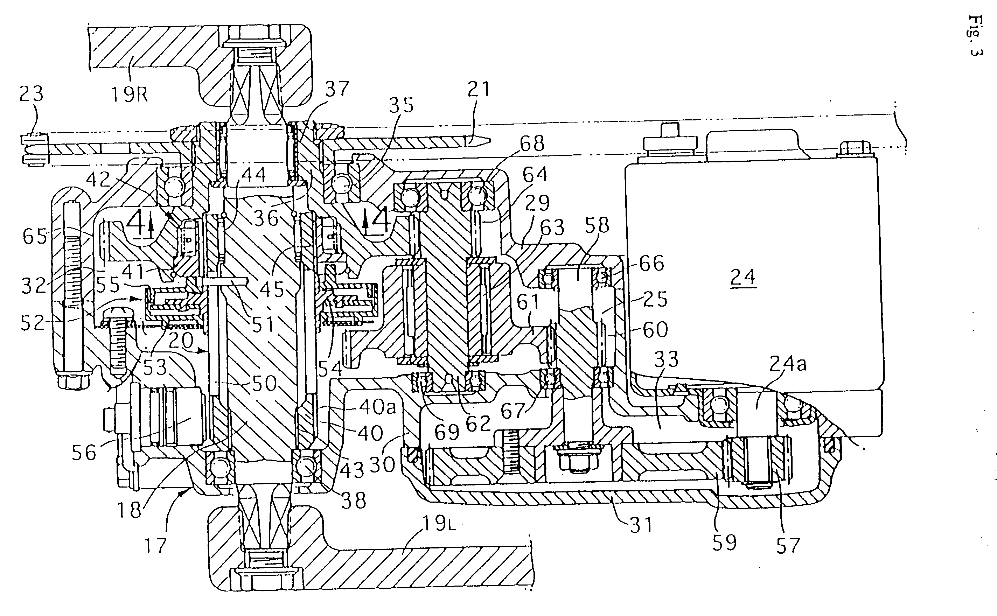

Referring now to Figs. 2 and 3, a drive component housing 17 is mounted to the lower edge of the main frame 11, and crank pedals 19_{L} and 19_{R} are secured to the left and right ends of the crankshaft 18, which is rotatably supported by the drive component housing 17. The pedaling force applied through these crank pedals 19_{L} and 19_{R} is transmitted, through the first power transmission system 20, from the crankshaft 18 to an output sprocket 21 which serves as the output component. An endless chain 23 meshes with the aforementioned output sprocket 21 and a driven sprocket 22 provided to the axle of the rear wheel W_{R}, making it possible for pedaling force applied through these crank pedals 19_{L} and 19_{R} to be transmitted to the rear wheel W_{R}.

The drive component housing 17 is also equipped with a power assist motor 24. The output of the power assist motor 24 is transmitted through the second power transmission system 25 to the output sprocket 21 to assist pedaling force applied through the crank pedals 19_{L} and 19_{R}.

A battery box 26 disposed at the front end of the main frame 11 houses a drive battery 27 comprising a plurality of Ni-Cd cells for supplying electrical power to the power assist motor 24. An electronic control unit, motor driver, or other control device 28 for controlling the operation of the power assist motor 24 is disposed at the back end of the main frame 11.

The drive component housing 17 comprises a right housing 29, a left housing 30 that is joined to the right housing 29 such that a first housing chamber 32 is formed between it and the right housing 29, and a cover 31 that is joined to the left housing 30 such that a second housing chamber 33 is formed between it and the left housing 30. The right housing 29 and the left housing 30 are mounted to the bottom of the main frame 11 by a pair of bolts 34 and 34.

The crankshaft 18 is rotatably supported by the drive component housing 17 in such a way that most of its bulk is housed within the first housing chamber 32. The right end of said crankshaft 18 is supported through a roller bearing 37 disposed at the inside peripheral surface of a rotating sleeve 36; the sleeve is supported on the right housing 29 by a ball bearing 35. The left end of the crankshaft 18 is supported on the left housing 30 by a ball bearing 38. The output sprocket 21, which is disposed on the left side of the right housing 29, is linked to the aforementioned rotating sleeve 36.

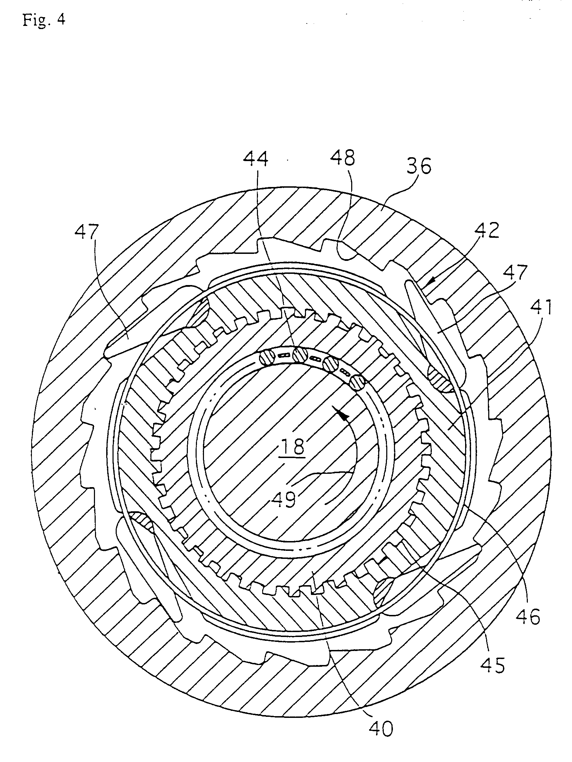

Referring now to Fig. 4, the first power transmission system 20, which transmits power from the crankshaft 18 to the output sprocket 21, is housed within the first housing chamber 32. It comprises a power transmission component 40, one end of which is linked to the crankshaft 18, an annular rotating component 41 which is linked to the other end of said power transmission component 40, and a first one-way clutch 42 disposed between the rotating component 41 and the rotating sleeve 36.

The power transmission component 40 takes the form of a pipe which encircles the crankshaft 18 in a coaxial manner. One end of said power transmission component 40 is linked to the crankshaft 18 through a spline 43. A roller bearing 44 is disposed between inside peripheral surface of the other end of the power transmission component 40 and the crankshaft 18. The outside peripheral surface of the power transmission component 40 is linked to the inside peripheral surface of the rotating component 41 through a spline 45.

The first one-way clutch 42 is designed such that the rotating component 41, which rotates in unison with the power transmission component 40, serves as the clutch inner ring and the rotating sleeve 36 serves as the clutch outer ring. It is provided with a plurality (four, for example) of ratchet pawls 47 which pivot on the outside peripheral edge 46 of the rotating component 41 and are energized outward, and ratchet teeth 48 provided to the inside peripheral surface of the rotating sleeve 36.

With a first one-way clutch 42 of this design, rotation of the crankshaft 18 in the direction of normal rotation 49 by pushing the crank pedals 19_{L} and 19_{R} results in the transmission of crankshaft 18 torque to the output sprocket 21 through the power transmission component 40, the rotating component 41, the first one-way clutch 42, and the rotating sleeve 36. However, when the crankshaft 18 is rotated in the direction of reverse rotation by pushing the crank pedals 19_{L} and 19_{R}, the first one-way clutch 42 slips, permitting reverse rotation by the crankshaft 18.

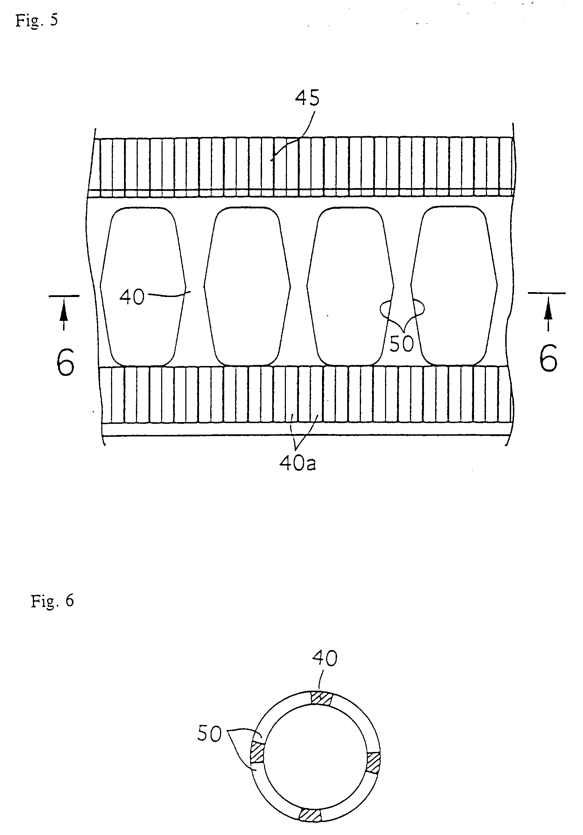

The transmission component 40, which transmits power between the crankshaft 18 and the rotating component 41, functions like a torsion bar. As shown in Figs. 5 and 6, its axial midsection is provided with a plurality, (four, for example) open sections 50, 50 disposed at intervals in the circumferential direction. A pin 51 for restricting the maximum torsion of the transmission component 40 is affixed to the crankshaft 18. The restricting pin 51 is passed through one of the open sections 50.

A potentiometer 52, which serves as a sensor for detecting rotational phase between the crankshaft 18 and the first one-way clutch 42, is disposed to the outside of the aforementioned power transmission component 40. This potentiometer 52 comprises a case 53 which is supported in a stationary manner on the left housing 30 and encircles the power transmission component 40, a first movable component 54 of annular form which encircles the power transmission component 40, is housed within the aforementioned case 53, and is engaged by the aforementioned pin 51, and a second movable component 55 of annular form which encircles the power transmission component 40, is housed opposite the first movable component 54 within the aforementioned case 53, and is engaged by the rotating member 41. Since the first movable component 54 rotates together with the crankshaft 18 and the second movable component 55 rotates together with the rotating member 41, the rotational phase between the first and second movable components 54 and 55 corresponds to the rotational phase between the crankshaft 18 and the first one-way clutch 42; thus, the rotational phase between the crankshaft 18 and the first one-way clutch 42 can be detected by the potentiometer 52.

The outside peripheral surface at one end of the power transmission component 40 is provided with a plurality of teeth 40a, 40a spaced at equidistant intervals. A rotational speed sensor 56 is mounted on the left housing 30 of the drive housing 17 such that it is disposed opposite the teeth 40a, 40a . The rotational speed of the power transmission component 40, and, hence, of the crankshaft 18, is detected by the rotational speed sensor 56.

The second power transmission system 25, which transmits the power of the power assist motor 24 to the output sprocket 21, comprises a drive gear 57 fixed to the output shaft 24a of the power assist motor 24 within the second housing chamber 33; a first intermediate gear 59 that is fixed to one end of a first rotating shaft 58 within the second housing chamber 33 and that meshes with the aforementioned drive gear 57; a second intermediate gear 60 integrally provided to the first rotating shaft 58 within the first housing chamber 32; a third intermediate gear 61 which meshes with the second intermediate gear 60; a second rotating shaft 62 disposed coaxially with the third intermediate gear 61; a second one-way clutch 63 disposed between the third intermediate gear 61 and the second rotating shaft 62; a fourth intermediate gear 64 integrally provided to the second rotating shaft 62 within the first housing chamber 32; and a driven gear 65 that is integrally provided to the rotating sleeve 36 (to which the output sprocket 21 is linked) and that meshes with the fourth intermediate gear 64.

The axis of the first rotating shaft 58 is disposed parallel to the output shaft 24a of the power assist motor 24. A ball bearing 66 is interposed between the right housing 29 and the first rotating shaft 58, and a ball bearing 67 is interposed between the left housing 30 and the first rotating shaft 58. The axis of the second rotating shaft 64 is disposed parallel to the first rotating shaft 58. A ball bearing 68 is interposed between the right housing 29 and the second rotating shaft 64, and a ball bearing 69 is interposed between the left housing 30 and the second rotating shaft 64.

With a second power transmission system 25 of this design, the torque produced by operation of the power assist motor 24 is transmitted to the output sprocket 21, but when operation of the power assist motor 24 is terminated, the second one-way clutch 63 functions so as to permit slip by the second rotating shaft 64, whereby rotation of the output sprocket 21 due to pedaling force from the crank pedals 19_{L} and 19_{R} is not hindered.

The effect of this working example will now be described. When the rider pushes the crank pedals 19_{L} and 19_{R} to propel the power-assisted bicycle B, the motive force of the crankshaft 18 is transmitted to the output sprocket 21 through the first power transmission system 20, and this motive force is then transmitted to the rear wheel W_{R} through the chain 23 and the driven sprocket 22.

The pedaling force applied to the crank pedals 19_{L} and 19_{R} is detected by the potentiometer 52. Specifically, torque commensurate with the pedaling force applied to the crank pedals 19_{L} and 19_{R} acts on the power transmission component 40, whereby the power transmission component 40 experiences relative rotation of its two ends; the rotational phase produced between the crankshaft 18 and the first one-way clutch 42 in response to this torsion is detected by the potentiometer 52. The rotational speed of the crankshaft 18 is detected by the rotational speed sensor 56. Thus, assist power commensurate with the detected value from the potentiometer 52 and the detected value from the rotational speed sensor 56 is provided by the power assist motor 24, reducing the burden placed upon the rider.

The pipe-shaped power transmission component 40, which is one element of the first power transmission system 20 and which functions like a torque bar, is disposed such that it encircles the crankshaft 18 in coaxial fashion. This disposition of the power transmission component 40 makes it unnecessary to increase the diameter of the crankshaft 18 in order to raise rigidity, allowing the torque transmission device to be made more compact.

Since the potentiometer 52 is disposed to the outside of the power transmission component 40 such that it encircles the power transmission component 40, the potentiometer 52 does not require much space for installation, allowing for a more compact installation. The rotational phase produced between the crankshaft 18 and the first one-way clutch 42 can be detected directly and in a highly reliable manner.

Since a plurality of open sections 50 are disposed at intervals in the circumferential direction in the axial midsection of the power transmission component 40, approximately equal bending load is applied [at each point] along the circumference of the power transmission component 40, thus preventing local application of heavy loads to the power transmission component 40 and contributing to a more durable power transmission component 40.

In a torque transmission device for a power-assisted vehicle in which an output component that outputs power for transmission to the rear wheel is disposed coaxially with a crankshaft having crank pedals at both ends, in such a way that [said component] can rotate relative to the aforementioned crank shaft; a first power transmission system equipped at its midsection with a first one-way clutch is disposed between the crankshaft and the output component; and a second power transmission system equipped at its midsection with a second one-way clutch is disposed between the power assist motor and said output component, to obviate the need to increase crankshaft diameter in order to raise rigidity, making possible a more compact torque transmission device.

A pipe-shaped power transmission component 40, an element of the first power transmission system 20 making it possible for the power of the crank shaft 18 to be transmitted to the output component 21, is disposed coaxially encircling the crank shaft 18, and one end of said power transmission component 40 is linked to the crank shaft 18.

## Claims

1. A power assisted vehicle having a torque transmission device, in which an output component (21) that outputs power for transmission to a drive wheel (W_{R}) is disposed coaxially with a crankshaft (18) having crank pedals (19_{L} and 19_{R}) at both ends, in such a way that [said component] can rotate relative to said crank shaft (18); a first power transmission system (20) equipped at its midsection with a first one-way clutch (42) is disposed between the crankshaft (18) and the output component (21); and a second power transmission system (25) equipped at its midsection with a second one-way clutch (63) is disposed between a power assist motor (24) and said output component (21);
wherein a pipe-shaped power transmission component (40), an element of the first power transmission system (20) which allows the motive force of the crankshaft (18) to be transmitted to the output component (21), is disposed coaxially encircling the crank shaft (18), and one end of said power transmission component (40) is linked to the crank shaft (18).

2. A power assisted vehicle having a torque transmission device, as defined in claim 1, wherein the first one-way clutch (42) is disposed between the other end of the aforementioned power transmission component (40) and the output component (21).

3. A power assisted vehicle having a torque transmission device, as defined in claim 1 or 2, wherein the axial midsection of the aforementioned power transmission component (40) is provided with a plurality of open sections (50) disposed at intervals in the circumferential direction.

4. A power assisted vehicle having a torque transmission device, as defined in claim 2 or 3, wherein a sensor (52) for detecting rotational phase between the crank shaft (18) and the first one-way clutch (42) is disposed to the outside of the aforementioned power transmission component (40).

5. A power assisted vehicle having a torque transmission device, as defined in claim 4, wherein the aforementioned sensor (52) is equipped on the crankshaft (18) side with an annular first movable member (54) that encircles the power transmission component (40), and on the first one-way clutch (42) side with an opposing annular second movable member (55) that encircles the power transmission component (40), and is designed to be capable of detecting rotational phase between the first and second movable members (54, 55).

## Patentansprüche

1. Fahrzeug mit Hilfsantrieb und einer Drehmomentübertragungsvorrichtung, in der eine Ausgangskomponente (21), die Kraft zur Übertragung zu einem Antriebsrad (W_{R}) ausgibt, koaxial zu einer Kurbelwelle (18) angeordnet ist, die an beiden Enden Kurbelpedale (19_{L} und 19_{R}) aufweist, derart, daß sie [die Komponente] sich relativ zu der Kurbelwelle (18) drehen kann; wobei ein erstes Kraftübertragungssystem (20), das an seinem Mittelabschnitt mit einer ersten Einwegkupplung (42) ausgestattet ist, zwischen der Kurbelwelle (18) und der Ausgangskomponente (21) angeordnet ist; und wobei ein zweites Kraftübertragungssystem (25), das an seinem Mittelabschnitt mit einer zweiten Einwegkupplung (63) ausgestattet ist, zwischen einem Hilfsmotor (24) und der Ausgangskomponente (21) angeordnet ist;
wobei eine rohrförmige Kraftübertragungskomponente (40), ein Element des ersten Kraftübertragungssystems (20), das die Übertragung der Antriebskraft der Kurbelwelle (18) zu der Ausgangskomponente (21) gestattet, koaxial um die Kurbelwelle (18) herum angeordnet ist und ein Ende der Kraftübertragungskomponente (40) mit der Kurbelwelle (18) gekoppelt ist.

2. Fahrzeug mit Hilfsantrieb und einer Drehmomentübertragungsvorrichtung nach Anspruch 1, wobei die erste Einwegkupplung (42) zwischen dem anderen Ende der vorgenannten Kraftübertragungskomponente (40) und der Ausgangskomponente (21) angeordnet ist.

3. Fahrzeug mit Hilfsantrieb und einer Drehmomentübertragungsvorrichtung nach Anspruch 1 oder 2, wobei der axiale Mittelabschnitt der vorgenannten Kraftübertragungskomponente (40) mit einer Mehrzahl offener Abschnitte (50) versehen ist, die in der Umfangsrichtung mit Abständen angeordnet sind.

4. Fahrzeug mit Hilfsantrieb und einer Drehmomentübertragungsvorrichtung nach Anspruch 2 oder 3, wobei ein Sensor (52) zum Erfassen der Drehphase zwischen der Kurbelwelle (18) und der ersten Einwegkupplung (42) an der Außenseite der vorgenannten Kraftübertragungskomponente (40) angeordnet ist.

5. Fahrzeug mit Hilfsantrieb und einer Drehmomentübertragungsvorrichtung nach Anspruch 4, wobei der vorgenannte Sensor (52) seitens der Kurbelwelle (18) mit einem ringförmigen ersten beweglichen Element (54) ausgestattet ist, das die Kraftübertragungskomponente (40) umgibt, und seitens der ersten Einwegkupplung (42) mit einem gegenüberstehenden ringförmigen zweiten beweglichen Element (55), das die Kraftübertragungskomponente (40) umgibt, und so ausgestaltet ist, daß er die Drehphase zwischen dem ersten und dem zweiten beweglichen Element (54, 55) erfassen kann.

## Revendications

1. Véhicule à assistance motorisée équipé d'un dispositif de transmission de couple, dans lequel un élément structurel de sortie (21), fournissant une puissance en vue d'une transmission à une roue d'entraînement (W_{R}), est agencé coaxialement à un vilebrequin (18) muni de pédales (19_{L} et 19_{R}) à ses deux extrémités, de telle sorte que ledit élément structurel puisse tourner par rapport audit vilebrequin (18) ; un premier système (20) de transmission de puissance, équipé d'un premier embrayage unidirectionnel (42) dans sa région centrale, est interposé entre le vilebrequin (18) et l'élément structurel de sortie (21) ; et un second système (25) de transmission de puissance, équipé d'un second embrayage unidirectionnel (63) dans sa région centrale, est interposé entre un moteur (24) de puissance auxiliaire et ledit élément structurel de sortie (21) ;
dans lequel un élément structurel tubulaire (40) transmetteur de puissance, constituant un élément du premier système (20) de transmission de puissance qui permet à la force motrice du vilebrequin (18) d'être transmise à l'élément structurel de sortie (21), occupe une position coaxiale entourant ledit vilebrequin (18), et l'une des extrémités dudit élément structurel (40) transmetteur de puissance est rattachée audit vilebrequin (18).

2. Véhicule à assistance motorisée équipé d'un dispositif de transmission de couple, selon la revendication 1, dans lequel le premier embrayage unidirectionnel (42) est interposé entre l'élément structurel de sortie (21) et l'autre extrémité de l'élément structurel précité (40), transmetteur de puissance.

3. Véhicule à assistance motorisée équipé d'un dispositif de transmission de couple, selon la revendication 1 ou 2, dans lequel la région centrale axiale de l'élément structurel précité (40), transmetteur de puissance, est pourvue d'une pluralité de zones ouvertes (50) agencées à intervalles dans la direction circonférentielle.

4. Véhicule à assistance motorisée équipé d'un dispositif de transmission de couple, selon la revendication 2 ou 3, dans lequel un capteur (52), destiné à détecter une phase rotatoire entre le vilebrequin (18) et le premier embrayage unidirectionnel (42), est disposé à l'extérieur de l'élément structurel précité (40) transmetteur de puissance.

5. Véhicule à assistance motorisée équipé d'un dispositif de transmission de couple, selon la revendication 4, dans lequel le capteur précité (52) est équipé, du côté du vilebrequin (18), d'une première pièce annulaire mobile (54) entourant l'élément structurel (40) transmetteur de puissance et, du côté du premier embrayage unidirectionnel (42), d'une seconde pièce annulaire mobile (55) qui est tournée à l'opposé et entoure ledit élément structurel (40) transmetteur de puissance ; et est conçu pour être en mesure de détecter une phase rotatoire entre les première et seconde pièces mobiles (54, 55).
